# EUROPEAN PATENT APPLICATION

(11) **EP 4 120 101 A1**
(43) Date of publication of application: **18.01.2023**
(21) Application number: 22179390.4
(22) Date of filing: 06.01.2012
(51) Int. Cl.: G06F 16/93, G06N 5/02, G06F 16/955

(54) **CONCEPTS AND LINK DISCOVERY SYSTEM**

(30) Priority: 07.01.2011 US 201161430919 P
(62) Divisional of application: 12732248.5
(71) Applicant: Ixreveal, Inc., Jacksonville, Florida 32216 (US)
(72) Inventor: MOHAN, Rengaswamy, Jacksonville, 32256 (US); WHITE, Matthew Bruce, Jacksonville, 32250 (US)
(74) Representative: Gill Jennings & Every LLP

(57) **Abstract**

In one embodiment, a method includes receiving a first selection, from a user, indicative of a first concept, the first concept being defined by the presence or absence of a text string in an unstructured data object or a data code stored in a structured data object. The method further includes receiving a second selection, from a user, the second selection indicative of a second concept, the second concept being defined by the presence or absence of a text string in an unstructured data object or a data code stored in a structured data object. The method further includes determining a relationship between the first concept and the second concept, the relationship based on a number of documents from a plurality of documents that include the first concept and the second concept. The method further includes outputting a visual representation of the relationship to a display.

## Description

### Background

This application claims priority to and the benefit of U.S. Provisional Patent Application No. 61/430,919, filed January 7, 2011, and entitled "Concepts and Link Discovery," which is incorporated herein by reference in its entirety.

Intelligence and crime-fighting organizations typically use a combination of analytical and graphical techniques to discover and express links (i.e., relatedness) between entities (e.g., people, places and things). Such techniques generally analyze one or more datasets to discover links between the various entities that occur or are mentioned therein. These techniques are often referred to as "link analysis."

During this process, discovered links can be expressed in graphical form to facilitate comprehension of the various entity relationships inherent in the data. For example, discovered links between entities can be expressed via a diagram or illustration that includes two or more nodes connected by a series of lines, with each node representing an entity, and each inter-node line denoting the presence of a link between those two nodes. Such link analysis is typically confined to linking people, places and things based on common attributes that are organized within pre-structured data tables. Such structured data and/or fields include data found in organized columns, tables, spreadsheets, or other data structures, such as relational databases (e.g., Oracle, IBM DB2, Microsoft SQL Server, MySQL or PostgreSQL relational databases).

One currently-accepted method of link analysis is nodal in nature, and involves establishing links between structured data fields included in the tables of a relational database. This traditional link analysis is relatively efficient on organized, structured data, and can be useful in "connecting the dots" for users when expressed visually as described above.

There are many limitations to this approach, however. First, the link connections defined by traditional link analysis are confined to the rules of structured databases. Such rules are often ineffective when the analyzed data is multi-faceted, unstructured and/or requires contextual factors for proper linking. Current solutions also often involve reworking of the data into a structured format that is capable of being processed by traditional link analysis tools and systems. In other words, such solutions often expend resources in an attempt to fit the data to the solution, rather than the solution to the data. Further, current approaches generally determine that a link exists between two entities when each of the two entities is or includes a structured field that matches that of the other. Thus, these approaches generally do not account for conceptual proximity or context. In fact, such approaches are generally incapable of properly accounting for and/or analyzing unstructured (or "dirty") data fields. This inability to analyze unstructured data not only results in inaccurate link definitions, but also generally leaves an organization's unstructured data entirely unanalyzed. Given that the majority of data available to an organization is typically unstructured in nature, the above-described shortfalls significantly limit the efficacy of current data analysis techniques.

For example, a given police report might contain or include clear links between two or more entities mentioned within textual (i.e., unstructured) information that is not included in any structured field stored in a database (or other data structure). Were this data organized or presented in structured form, a link would only be discovered between a person and an address mentioned in the police report if both the person and the address were to occur within the same structured record or field. However, in many situations, links between two or more entities can exist based on something other than mere co-occurrence within a document or corpus of documents. For example, a link between two or more entities may be based on proximity within unstructured data, or based on other properties or content of the data (such as words, phrases, contexts, or other linguistic or code features). For example, the Naval Criminal Investigative Service (NCIS) may seek to discover references to the word/term "navy" that do not occur in close proximity to other often-correlated terms such as "blue" or "Old" (per the clothing store "Old Navy"). In this example, NCIS may also wish to discover references to naval ships or other relevant entities or concepts, even if the term "navy" does not explicitly occur within the analyzed data. Using traditional link analysis, a typical solution to this problem would require user input to clarify the term "navy," including entry of potentially ambiguous terms that the link analysis system should ignore (e.g., those described above). However, such efforts to generate structure from unstructured data are generally ineffective.

Thus, a need exists to discover both links between entities and links between more abstract constructs such as behaviors, regions, happenings, activities etc (i.e., concepts). As a real world example, traditional link analysis may discover a link between a person (e.g., underwear bomber Abdul Muttallab), one or more phone numbers, countries visited by that person and organizations with which that person has affiliated (e.g., an Al Qaeda group in Yemen). Because such behaviors are typically described in a combination of structured and unstructured text (i.e., human-composed words or prose), typical link discovery techniques are incapable of accurately and adequately identifying links between them. For example, an analysis on navy-related police arrests that relies on structured database fields would typically rely upon columns such as "place of employment" of the arrestee; in this case this would indicate Navy for those arrested who work for the navy. Deeper and accurate intelligence for this analysis however would be accomplished by fusing unstructured data from the arrest report's narrative information. This is because there are many examples of navy-related arrests that would not specify navy as "place of employment" in the structured field despite the fact that the arrestee has strong ties with Navy. Examples include the arrest of a spouse, arrest of contract workers who work for the navy via one of any number of companies or any of a myriad of citations that clearly relate to the navy such as their facilities, vessels or property to name a few. Further, because links can be multi-faceted and can occur at multiple conceptual levels and across various data types, data systems and/or repositories, traditional link analysis is incapable of accurately and adequately identifying such links.

Thus, a need exists for methods and apparatus configured to discover links between concepts present in unstructured data. A need further exists for methods and apparatus configured to flexibly and efficiently discover links between persons and/or organizations that fit a combination of predefined characteristics and/or behaviors.

### Summary

In some embodiments, a method includes receiving a first selection, from a user, indicative of a first concept, the first concept being defined by the presence or absence of a text string in an unstructured data object or a data code stored in a structured data object. The method further includes receiving a second selection, from a user, the second selection indicative of a second concept, the second concept being defined by the presence or absence of a text string in an unstructured data object or a data code stored in a structured data object. The method further includes determining a relationship between the first concept and the second concept, the relationship based on a number of documents from a plurality of documents that include the first concept and the second concept. The method further includes outputting a visual representation of the relationship to a display.

### Brief Description of the Drawings

FIG. 1 is a schematic diagram that illustrates a concept and link discovery system according to an embodiment.
FIG. 2 is a schematic diagram that illustrates a processor of a host device according to an embodiment.
FIG. 3 is a flow chart illustrating a method of operating a concept and link discovery system according to an embodiment.
FIG. 4A illustrates a graphical user interface (GUI) of a concept and link discovery system, according to an embodiment.
FIG. 4B illustrates a graphical user interface (GUI) of a concept and link discovery system, according to an embodiment.
FIG. 5A illustrates a link diagram as defined by a traditional link analysis approach.
FIG. 5B illustrates a link diagram defined by a concept-based link discovery approach, according to an embodiment.
FIG. 6 illustrates a portion of a link diagram defined by a concept-based link discovery module, according to an embodiment.
FIG. 7 is a flow chart illustrating a method of operating a concept and link discovery system according to an embodiment.
FIG. 8A illustrates a concept-based link diagram based on a dataset that includes at least one concept link, according to an embodiment.
FIG. 8B illustrates a concept-based link diagram based on a dataset that includes at least one multi-concept link, according to an embodiment.
FIG. 8C illustrates a concept-based link diagram based on a dataset that includes at least one multi-concept link, at least one other concept, and at least one new concept, according to an embodiment.
FIG. 8D illustrates a concept-based link diagram based on a dataset that includes at least one multi-concept link, at least one other concept, and at least one new concept, according to an embodiment.
FIG. 8E illustrates a concept-based link diagram based on a dataset that includes at least one multi-concept link, and at least one new concept, according to an embodiment.

### Detailed Description

As used herein, "concept" refers to a representation of any real world observation and/or a collection of one or more words or phrases that convey an idea or meaning. A concept can also be and/or include one or more business needs, ideas, behaviors, collections of multi-faceted entities, or any combination thereof. In some embodiments, a concept can be defined based at least in part on a combination of machine-learning techniques and/or user input. More information regarding concepts, concept definitions and concept discovery is set forth in U.S. Patent Nos. 6,970,881 and 7,194,483, entitled "Concept-based Method and System for Dynamically Analyzing Unstructured Information" and "Method, System, and Computer Program Product for Concept-based Multi-dimensional Analysis of Unstructured Information," respectively, both of which are hereby incorporated by reference in their entireties.

A concept can also include structured data (such as codes and numbers) and/or unstructured data (such as human-friendly text). In some embodiments, a machine or user can define one or more concepts based at least in part on other concepts in a hierarchical manner, and/or as part of a regular expression or a combination of both. Further information regarding hierarchical concepts and concepts defined based at least in part on one or more regular expressions is set forth in co-pending U.S. Patent Application No. 12/423,024, filed on April 14, 2009, entitled "Concept-based Analysis of Structured and Unstructured Data Using Concept Inheritance." In some embodiments, a concept can optionally include structured and unstructured data at various levels of granularity, thereby providing the ability to dynamically and seamlessly blend data as dictated by a business rule.

Because concepts can occur in text (typically unstructured data), one or more modules can be configured to employ co-occurrence, proximity and linguistic techniques to discover links between concepts present in unstructured data. More specifically, such modules can discover and/or define a link between two of more concepts based on a) a co-occurrence of the two or more concepts within the same document, b) a co-occurrence of the two or more concepts within a user-defined proximity within a document or documents, and/or c) recognition of a subject-predicate, subject-object or predicate-object relationship present within a natural language portion. In this manner, the one or more modules can analyze documents or records based on the concepts present therein, and thus provide a dynamic alternative to traditional link analysis techniques.

In some embodiments, the one or more modules can be one or more hardware and/or software modules (executing in hardware) configured to receive one or more datasets, data sources, or records and perform concept-based link discovery thereon. For example, the modules can be included in and/or executing on a compute device, host device, and/or system including a compute device and a host device, capable of referencing computerized text and/or database information. The compute device can receive and/or access the computerized text and/or database information via a network (e.g., a local area network (LAN) a wide area network (WAN), or the Internet), a removable storage medium (e.g., an optical disc, a flash memory drive, etc.), or a fixed storage medium (e.g., a hard disk drive or solid state drive (SSD)). The one or more modules can then discover and/or define one or more concepts included in the computerized text and/or database information. Having defined the one or more concepts present in the received data, the one or more modules can next discover and define one or more concept-based links existing between two or more of the discovered concepts. In some embodiments, the one or more modules can next store the discovered concepts and concept-based links at a memory, and/or optionally output the concepts and/or concept links in visual form for user consumption (such as via a diagram displayed on a monitor or other output device).

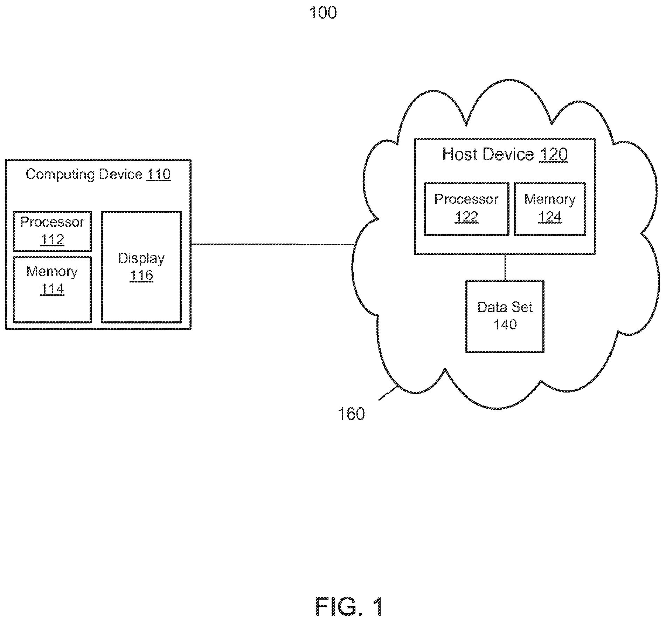

FIG. 1 is a schematic diagram that illustrates a compute device 110 in communication with a host device 120 via a network 160, according to an embodiment. The network 160 can be any type of network (e.g., a local area network (LAN), a wide area network (WAN), a virtual network, a telecommunications network) implemented as a wired network and/or wireless network. As described in further detail herein, in some embodiments, for example, the compute device 110 is a personal computer connected to the host device 120 via an Internet Service Provider (ISP) and the Internet (e.g., network 160).

In some embodiments, the compute device 110 can communicate with the host device 120 and the network 160 via intermediate networks and/or alternate networks. Such intermediate networks and/or alternate networks can be of a same type and/or a different type of network as network 160. As such, in some embodiments, the compute device 110 can send data to and/or receive data from the host device 120 using multiple communication modes (e.g., email, text messages, instant messages, optical pattern transmissions, using a mobile device application, via a website, using a personal computer (PC) application, and/or TCP/IP transmissions, etc.) that may or may not be transmitted to the host device 120 using a common network.

Host device 120 can be configured to send data over the network 160 to and/or receive data from the compute device 110. In some embodiments, host device 120 is configured to function as, for example, a server device (e.g., a web server device), a network management device, a data repository and/or the like.

The host device 120 includes a memory 124 and a processor 122. The memory 124 can be, for example, a random access memory (RAM), a memory buffer, a hard drive, a database, an erasable programmable read-only memory (EPROM), an electrically erasable read-only memory (EEPROM), a read-only memory (ROM) and/or so forth. In some embodiments, the memory 124 of the host device 120 includes data used to update a data set 140 associated with one or more concepts. In such embodiments, for example, the host device 120 is configured to add, remove, revise and/or edit dataset 140 based on a signal received from a compute device 110 using one or more communication modes. In some embodiments, the memory 124 stores instructions to cause the processor to execute modules, processes and/or functions associated with such a universal list system and/or service.

The processor 122 of the host device 120 can be any suitable processing device configured to run and/or execute the concept and link discovery system 100. For example, the processor 122 can be configured to update data set 140 in response to receiving a signal from a compute device 110, as described in further detail herein. In some embodiments, the processor 122 can be a general purpose processor, a Field Programmable Gate Array (FPGA), an Application Specific Integrated Circuit (ASIC), a Digital Signal Processor (DSP), and/or the like.

The host device 120 is operatively coupled to the data set 140. The data set 140 can reside, for example, in a computerized memory such as a RAM, a ROM, a hard disk drive, an optical drive, or other removable media. A structured data source (not shown) of dataset 140 can be organized into, for example, a relational database such as a Structured Query Language (SQL) database, one or more comma-separated values (CSV) files, one or more other pattern-delimited files, or other structured data format hierarchy. Unstructured data objects (not shown) of dataset 140 can be, for example, one or more of: a handwritten document, a typed document, an electronic word-processor document, a printed or electronic spreadsheet document, a printed form or chart, or other electronic document that contains text such as an e-mail, Adobe PDF document, Microsoft Office document, and the like. In some embodiments, the structured data source can include, for example, one or more unstructured data elements, such as a string of text stored in as a relational database column of type string or varchar. Data set 140 can include user and/or machine generate concepts, including hierarchical concepts (e.g., a concept defined at least by one or more other concepts).

Compute device 110 can be, for example, a compute entity (e.g., a personal compute device such as a desktop computer, a laptop computer, etc.), a mobile phone, a monitoring device, a personal digital assistant (PDA) and/or so forth. Although not shown, in some embodiments, compute device 110 can include one or more network interface devices (e.g., a network interface card) configured to connect the compute device 110 to the network 160.

As shown in FIG. 1, the compute device 110 has a processor 112, a memory 114, and a display 114. The memory 114 can be, for example, a random access memory (RAM), a memory buffer, a hard drive, and/or so forth. The display 116 can be any suitable display, such as, for example, a liquid crystal display (LCD), a cathode ray tube display (CRT) or the like. In other embodiments, the compute device 110 can include another output device instead of or in addition to the display 116. For example, the compute device 110 can include an audio output device (e.g., a speaker), a tactile output device, and/or the like.

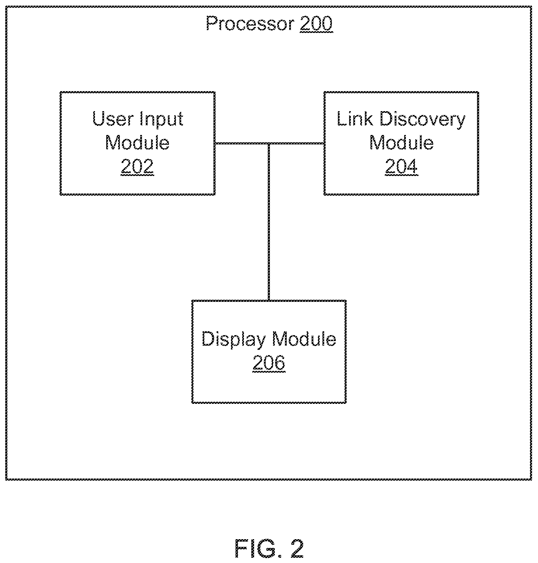

In some embodiments, one or more portions of the host device 120 and/or one or more portions of the compute device 110 can include a hardware-based module (e.g., a digital signal processor (DSP), a field programmable gate array (FPGA)) and/or a software-based module (e.g., a module of computer code stored in memory and/or executed at a processor). In some embodiments, one or more of the functions associated with the host device 120 (e.g., the functions associated with the processor 122) can be included in one or more modules (see, e.g., FIG. 2). In some embodiments, one or more of the functions associated with the compute device 110 (e.g., functions associated with processor 112) can be included in one or more modules. In some embodiments, the compute device 110 can be configured to perform one or more functions associated with the host device 120, and vice versa.

FIG. 2 is a schematic illustration of a processor 200 of a host device hosting a concept and link discovery system, according to another embodiment. In some embodiments, the processor 200 can be similar to the processor 122 of the host device 120. More specifically, the processor 200 can be any suitable processing device configured to update a data set and/or perform concept-based link analysis using multiple communication modes.

The processor 200 includes a user input module 202, a link discovery module 204, and a display module 206. While each module is shown in FIG. 2 as being in direct communication with every other module, in other embodiments, each module need not be in direct communication with every other module. Moreover, in other embodiments, any other number of modules can be included within the processor 200.

The user input modules 202 is configured to receive user selections, new documents and/or datasets, and other inputs from a compute device (e.g., compute device 110). Specifically, the user input module 202 is configured to receive a signal indicating a user selection indicative of one or more concepts, and an associated signal to determine a link (relationship), and/or a strength of the link, between the one or more selected concepts. In some embodiments, the user input device can be configured to receive a parameter associated with the link, such as, for example, a proximity between the one or more concepts within a dataset, or portion of a dataset.

The link discovery module 204 is configured to receive user inputs via the user input module 202 and to discover links between the one or more selected concepts, based on the user inputs, as described in further detail herein. In some embodiments, the link discovery module 204 can be configured to discover a link based on a parameter received via the user input module 202, such as, for example, a proximity between the one or more selected concepts within the dataset, or portion of the dataset. In some embodiments, the link discovery module 204 can be configured to output a signal indicative of a discovered link, and/or of a strength of the discovered link, to the display module 206. In some embodiments the link discovery module can be configured to define a new concept based on a discovered link, and can be configured to add, and/or cause another module to add, the new concept to the dataset, as described below in further detail.

The display module 206 is configured to receive signals indicative of a discovered link, and/or the strength of the discovered link. The display module 206 is further configured to send a signal to cause a display to output a visual representation of the discovered link, and/or strength of the discovered link. In some embodiments, the display module 206 can be configured to cause a display to output a document or other data from a dataset, a new concept, other concepts, and/or links between the selected concept, new concept(s) and/or other concepts, as described below in further detail.

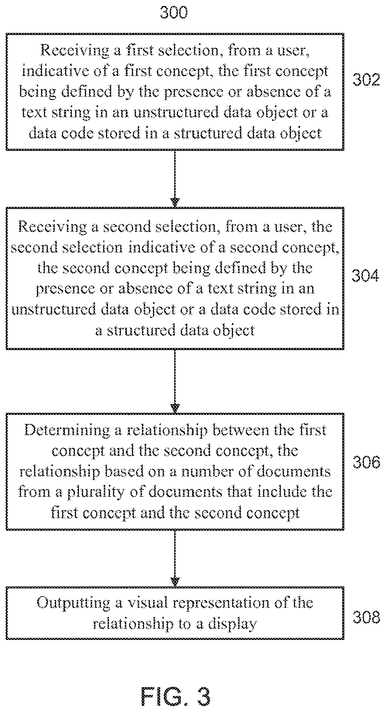

FIG. 3 is a flowchart that depicts a method 300 for concept and link discovery. The method 300 includes receiving a first selection, from a user, indicative of a first concept, the first concept being defined by the presence or absence of a text string in an unstructured data object or a data code stored in a structured data object, at 302. By way of example, with reference to FIG. 2, the link discovery module 204 can receive a first selection from a user, via the user input module 202. The method 300 includes receiving a second selection, from a user, the second selection indicative of a second concept, the second concept being defined by the presence or absence of a text string in an unstructured data object or a data code stored in a structured data object, at 304. With continued reference to FIG. 2, the link discovery module 204 can receive a second selection from a user, via the user input module 202. The method 300 includes determining a relationship between the first concept and the second concept, the relationship based on a number of documents from a plurality of documents that include the first concept and the second concept, at 306. With continued reference to FIG. 2, the link discovery module 204 can analyze one or more datasets, or portions of datasets, to determine how many, if any, documents include the first concept and the second concept. The method 300 includes outputting a visual representation of the relationship to a display, at 308. With continued reference to FIG. 2, the display module 206 can define and output a visual representation to a display, based on the link or links discovered by the link discovery module 204.

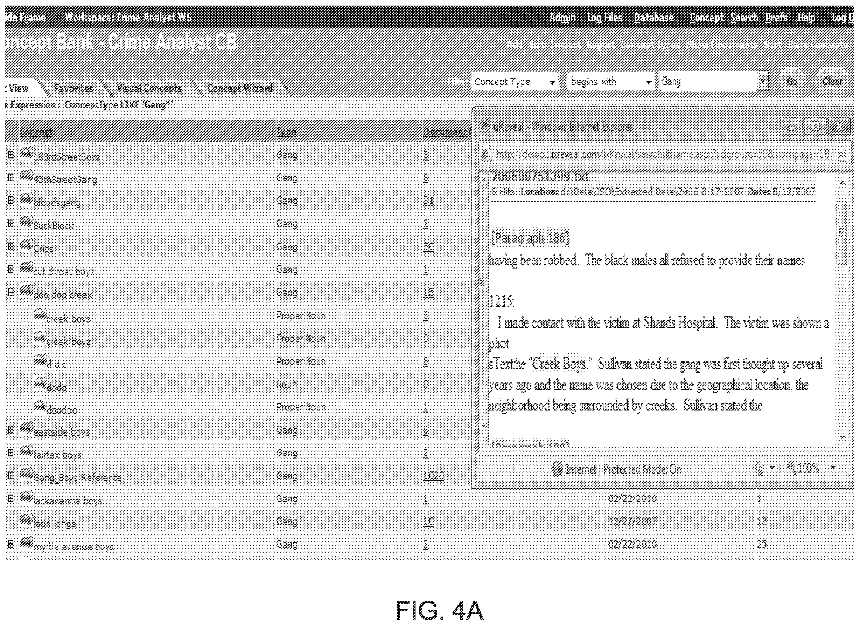

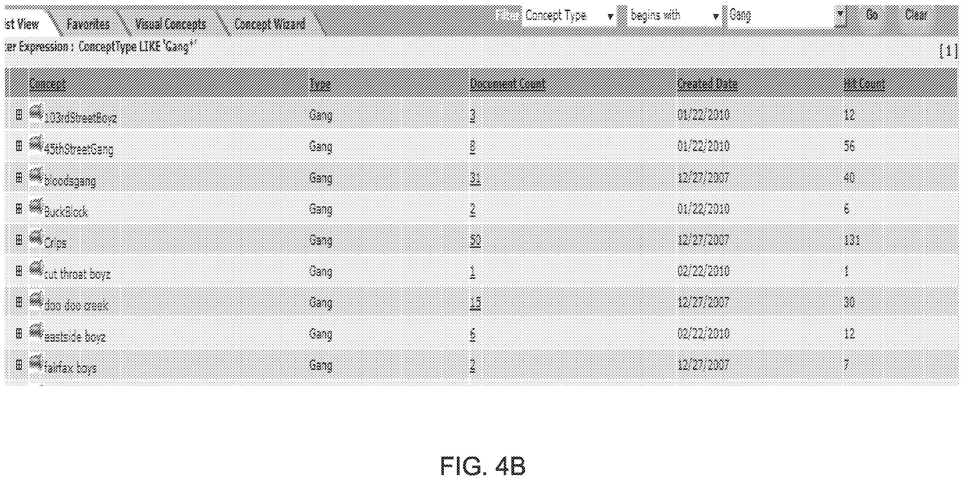

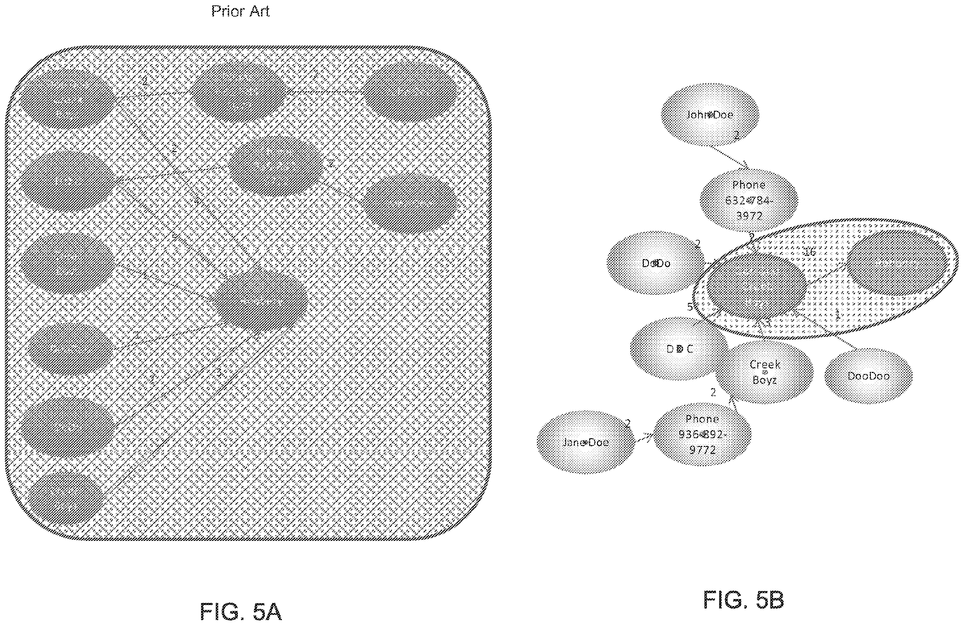

FIGS. 4A and 4B depict graphical user interfaces (GUI) of a concept and link discovery system according to an embodiment, FIG. 5A depicts a visual representation of a link discovery output of a prior art system, and FIG. 5B depicts a visual representation of a link discovery output according to an embodiment. With reference to FIGS. 4A - 5B, in an example case, a user may seek to determine, from multiple data sources, which street gangs in a given area or region are currently in conflict, and which are in collusion. Traditional link analysis would generally include the following steps:

(1) Creation of a data structure including multiple fields, followed by an indexing thereof and (2) capture and discovery of links based on known information about the gangs. For example, a master gang name structured field could be identified to begin the process of discovering connections among structured data fields. This master gang name field could then yield the ability to connect entities through related data (such as phone numbers, tattoo descriptions, graffiti descriptions, license plates, etc.), enabling a user to manually examine the discovered links to determine and/or define the nature of the relationship between the two gangs under consideration.

By contrast, in some embodiments the same example problem can be solved using the one or more modules, of a concept and link discovery system, configured to perform concept-based link discovery on the multiple data sources (as described above). In contrast to traditional link analysis, this process can require no generation or defining of structured data, no indexing of structured fields, no data-cleansing and no significant pre-knowledge of the gangs under consideration. For example, simply by defining concepts using the term "gang", and one or more behavior-related concepts to be examined (e.g., "beefing", "feuding", "coordinating", "allegiances", etc.), the module or modules, such as a link discovery module, can discover one or more links between the concepts. Having discovered and defined these concepts and concept-based links, the one or more modules can be configured to provide a user interface (UI) allowing a user to perform a query related to common links and/or relationships existing between one or more gangs, and receive a response based on the discovered concepts and/or concept-based links.

In this example, a gang named "doo doo creek boys" can be referenced within unstructured data included in the multiple data sources. As shown in FIG. 4A, by defining a concept for this gang that includes multiple variations of the gang name, the one or more modules can detect many or all occurrences, instances and/or mentions of the gang within the multiple data sources. In this manner, the module(s) can capture occurrences and discover links that would not be captured/discovered using traditional link analysis (i.e., using only structured data fields). As shown in FIG. 4A, searching for the concept "doo doo creek" results in 29 documents hits (15 for doo doo creek, 5 for creek boys, 8 for d d c, and 1 for doodoo). In contrast, as shown in FIG. 4B, in this example, traditional link analysis yields only a number of documents in which the exact phrase "doo doo creek" occurs. In other words, traditional link analysis may only discover the 15 documents that contain the phrase "doo doo creek," but may miss the 14 additional documents that include other phrases included in the definition of the concept for "doo doo creek." In a further example, a user of a link discovery system may attempt to discover a link between the "doo doo creek boys" and the "eastside boyz." Traditional link analysis may not discover an existing document that includes both of the phrases "creek boys" and "eastside boys" because it may only search for links that include both phrases "doo doo creek" and "eastside boyz." In contrast, a concept based link analysis system described herein would search the 15 documents that include "doo doo creek," for links to the eastside boyz, in addition to the 14 documents discovered based on the concept of "doo doo creek." As described herein, the definition of the concept "doo doo creek," or any other concept, is not limited to name variations, but could also include known member, hangouts, phone numbers, etc, associated with the doo doo creek boys.

FIG. 5A illustrates a visual representation of links as defined by a traditional link analysis approach. As shown in FIG. 5A, if each datum or concept associated with "Doo Doo Creek Boys" were included in a distinct structured field (as in traditional link analysis), no structured field would exist for the following variations of the gang name: "D D C", "Creek Boyz", "Creek Boys", "DoDo", "DooDoo", etc. Such an approach would likely include a relational table (such as a relational database table) linking phone numbers connecting gang members to the Doo Doo Creek gang. For example, an individual "John Doe" could be connected to a telephone number 632-784-3972, which in turn could be connected to "Doo Doo Creek Boys", and a robbery performed by John Doe could then be connected to "Doo Doo Creek Boys" as well.

In contrast FIG. 5B illustrates a visual representation of a link diagram as defined by a concept-based link discovery approach, according to an embodiment. With concept-based link analysis the one or more modules can define a concept "Doo Doo Creek Boys" that includes the gang name variations enumerated above, and/or other name variations. In some embodiments, each name variation can include a sub-concept for the example phone number described above and a sub-concept off of the phone number sub-concept for the name "John Doe". In this manner, the one or more modules can define the concept-based links portrayed in FIG. 5B within a hierarchical group or bank of concepts and concept-based links.

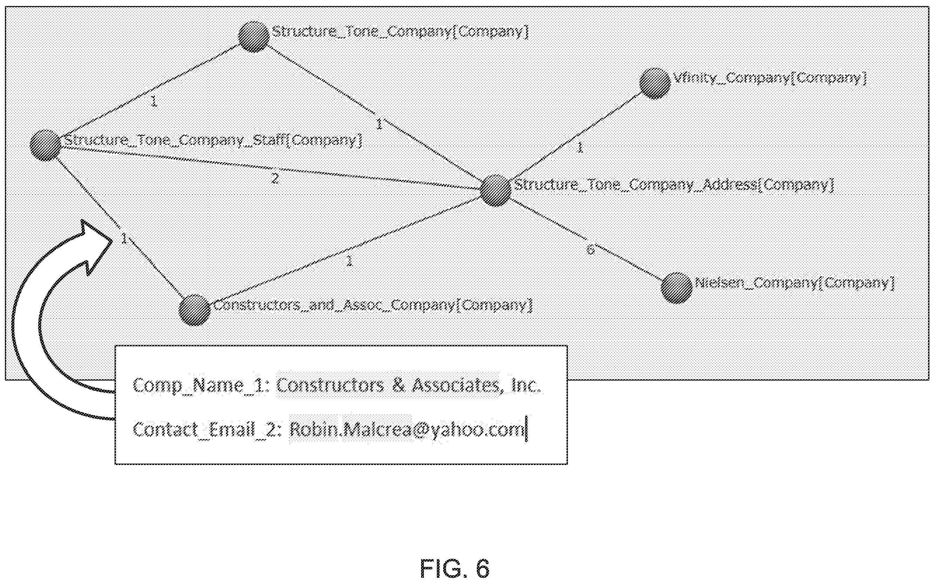

In some embodiments, the one or more modules, such as a link discovery module, can discover and/or define concepts and or concept-based links present in a dataset of "semi-structured" fields. Semi-structured data can be data that is both non-narrative and not fully structured, such as data defined according to one or more Extensible Markup Language (XML) standards, data included in one or more form documents and/or spreadsheets, etc. Despite numerous structured data fields including rich information, typical link analysis techniques may not produce or discover a link between a Company A ("Structure Tone Company") and a Company B ("Constructors and Associates") mentioned in the example dataset. In the example, Company A can be associated with one or more employees, locations, etc., and each employee of Company A can be further associated with one or more names, email addresses, phone numbers, etc. (often entered in various ways, in both structured and unstructured data). As such, FIG. 6 illustrates a portion of a link diagram defined by a link discovery module, according to an embodiment and this example. In some embodiments, the link discovery module can receive structured, unstructured and/or semi-structured data associated with Company A and or Company B, and accordingly define a concept for the employees of Company A (as depicted, e.g., in FIG. 6).

As also shown in FIG. 6, in the example dataset a link exists by virtue of a mention of Company A within a first document and a mention of an employee of Company A ("Robin Malacrea") within a second document. In the example dataset, a second link exists by virtue of a second mention of the employee in a third document that mentions the employee as a Point of Contact (POC) for a different company.

As also shown in FIG. 6, a concept for addresses associated with Company A is linked to one or more concepts for one or more other companies. More specifically, FIG. 6 illustrates a link (via a dark line) between "Structure_Tone_Company_address" and two other companies ("Vfinity_Company" and "Nielsen_Company"). As represented in FIG. 6, in the example dataset there is one document that associates this address with Vfinity Company and six documents that associate the address with Nielsen_Company.

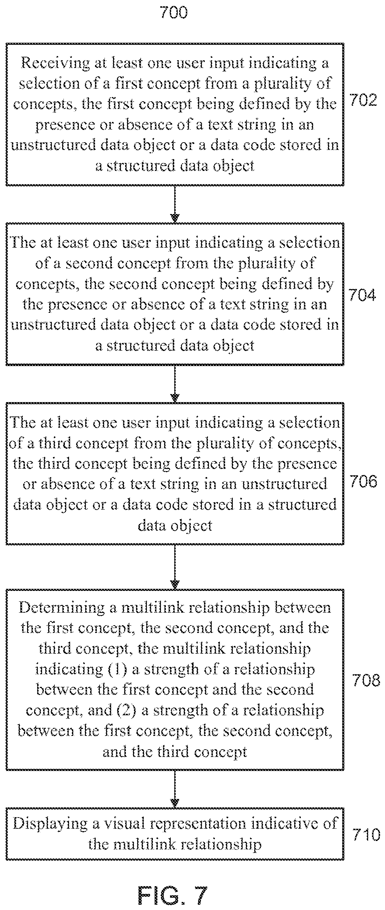

FIG. 7 is a flow chart illustrating a method 700 concept and link discovery method according to an embodiment. Specifically, method 700 illustrates a multilink discovery method according to an embodiment. The method 700 includes receiving at least one user input indicating a selection of a first concept from a plurality of concepts, the first concept being defined by the presence or absence of a text string in an unstructured data object or a data code stored in a structured data object, at 702. The method 700 includes the at least one user input indicating a selection of a second concept from the plurality of concepts, the second concept being defined by the presence or absence of a text string in an unstructured data object or a data code stored in a structured data object, at 704. The method 700 includes wherein the at least one user input indicating a selection of a third concept from the plurality of concepts, the third concept being defined by the presence or absence of a text string in an unstructured data object or a data code stored in a structured data object, at 706. The method 700 includes determining a multilink relationship between the first concept, the second concept, and the third concept, the multilink relationship indicating (1) a strength of a relationship between the first concept and the second concept, and (2) a strength of a relationship between the first concept, the second concept, and the third concept, at 708. The method 700 includes displaying a visual representation indicative of the multilink relationship, at 710.

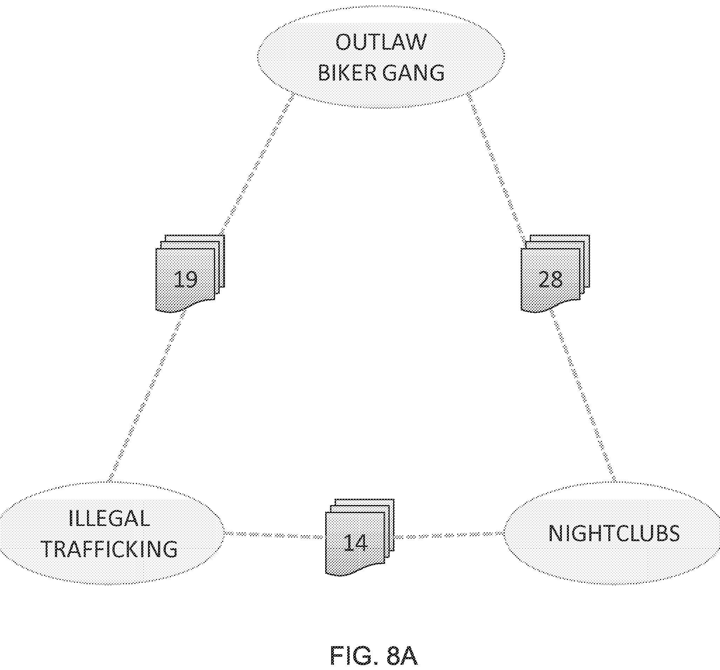

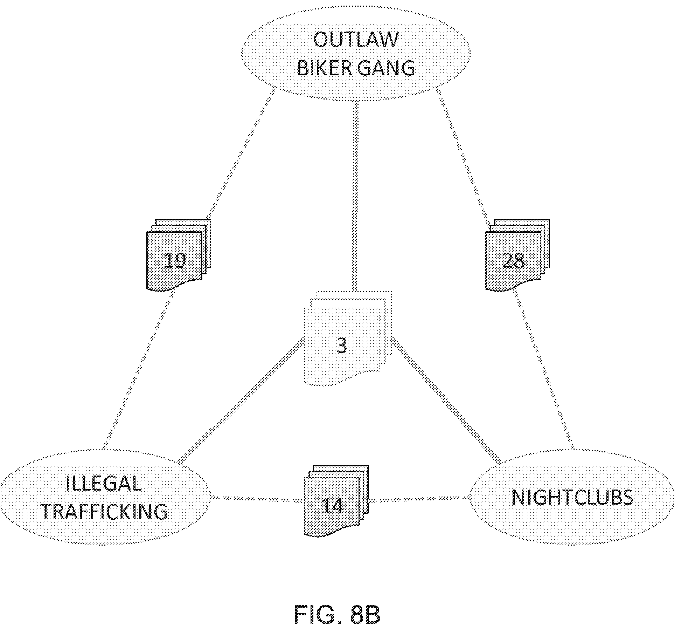

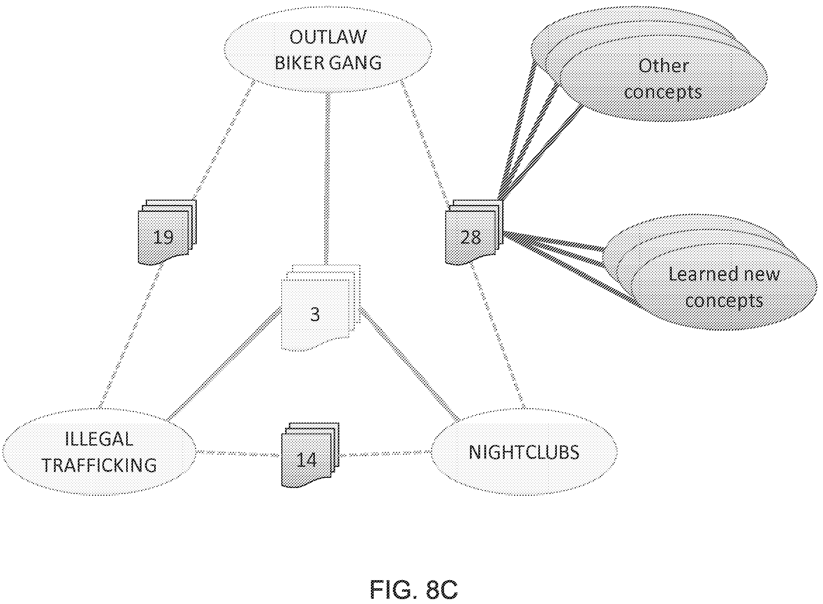

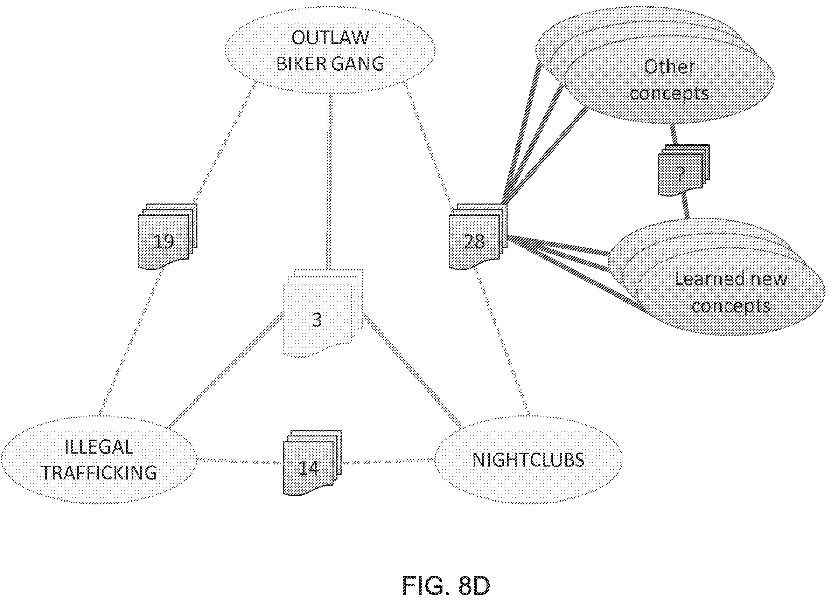

FIGS. 8A - 8D depict visual representations of discovered links. Specifically, FIG. 8A depicts single link relationships between three selected concepts; FIG. 8B depicts a multi-link relationship between three selected concepts added to FIG. 8A; FIG. 8C depicts two sets of additional concepts (other concepts and learned new concepts) associated with the link between two selected concepts added to FIG. 8B; and FIG. 8D depicts a link between the two sets of additional concepts added to FIG. 8C.

With reference to FIG. 2 and FIGS. 8A - 8B, in an example, a user of a concept and link discovery system can discover relationships between three concepts, specifically "Outlaw Biker Gang," "Illegal Trafficking," and "Night Clubs." In this example, a law enforcement agency may be investigating an illegal trafficking crime involving an unknown member of an outlaw biker gang that was committed in a night club. A user can use a compute device to select, outlaw biker gang, illegal trafficking, and night clubs. A user can make the selection using, for example, radio buttons, check boxes, a grab box, etc, in a graphical user interface. The user input module 202 can receive the selection from the compute device. The link discovery module 204 can receive the selection from the user input module 202, and can analyze a dataset, and/or a portion of a dataset to determine if there are any links between the first concept and the second concept, between the first concept and the third concept, and between the second concept and the third concept, (see, e.g., FIG. 8A).

With respect to a single document, a first concept is linked, or has a relationship, with a second concept when a text string associated with the first concept is present in that document, and a text string associated with the second concept is present in that document. In some embodiments, the number of documents from a plurality of documents that include the first concept and the second concept can be indicative of a strength of the link between two concepts. With reference to FIG. 8A, outlaw biker gang and nightclubs have 28 documents including both concepts (strongest link), outlaw biker gang and illegal trafficking have 19 documents including both concepts (middle link), and illegal trafficking and nightclubs have 14 documents including both concepts (weakest link). Because a concept can be associated with multiple distinct text strings, a first concept and a second concept can include linked documents including distinct text strings. By way of example the concept "outlaw biker gang" can be represented by the regular expression "eastside boy$ or Fairfax boy$," and the concept "illegal trafficking" can be represented by the regular expression "drug trafficking or human trafficking." A first document including eastside boyz and drug trafficking would be discovered as a link between outlaw biker gangs and illegal trafficking, and a second document including fairfax boys and human trafficking would also be discovered as a link between outlaw biker gangs and illegal trafficking.

The link discovery module 204 can receive the selection from the user input module 202, and can analyze the dataset, and/or the portion of the dataset to determine if there are any links between the first concept, the second concept, and the third concept, (see, e.g., FIG. 8B). With respect to a single document, a first concept, a second concept, and a third concept are linked, or have a relationship, when text string associated with the first concept, a text string associated with the second concept, and a text string associated with a third concept are present in that document. With reference to FIG. 8B, three documents include the first concept, the second concept, and the third concept. This relationship is represented by a single centralized node between the concepts.

The display module 206 can receive a signal from the link discovery module 204 and can define visual representations of the discovered single links and multilinks. The display module 206 can send a signal to the compute device of the user to cause the display of the compute device to display the visual representations. The visual representation of a link, and/or the strength of a link can include, for example, a line between related concepts. The line can include a weight and/or pattern to indicate an absolute strength of a relationship (e.g., incrementally thicker based on a number of documents), or a relative strength of a relationship (e.g., the strongest relationship is the thickest or has a certain pattern). In some embodiments, the weight or pattern of a line can be also be based on various data or meta data about the concept or the documents. For example, instead of counting the number of hits any given concept has connecting documents, the visualization could use the number of hits (beyond the fact that they connect) in an algorithm to determine line thickness. In another example, data about the concepts rather than the documents could determine the line thickness. In that example, some concepts can have weights, and these weights (scores) make some 'more' important (more heavily weighted in the formula which determines line thickness). Data or meta data about concepts or documents or the relationships or proximities of why they relate, or any combination of these, can be used in the visual representation of a discovered link.

In some embodiments, when two, or more, concepts are linked, a user can examine any documents included in the relationship by allowing the concept and link discovery system to discover other concepts in these documents that a) already also exist in concept banks and/or b) require machine learning. In the GUI, the user can manipulate the visual representation of the single or multilink relationship (e.g., "double-clicking, etc) to show lines connected to newly added concepts As shown in FIG. 8C, if 28 documents in the dataset are shown to connect two concepts, a user could then 'discover' other concepts in these documents. Said another way, the link and discovery module can determine that the documents also contain any number of concepts they have stored, or learn about concepts previously unknown by doing so using machine learning. Thus, iteratively, the user can continue indefinitely looking at other connections with documents between these newly added concepts and any others in the visualization. Said another way, other documents that may connect one of the newly discovered concepts could be connected to documents individually, as shown in FIG. 8D, or among other concepts in the same visualization.

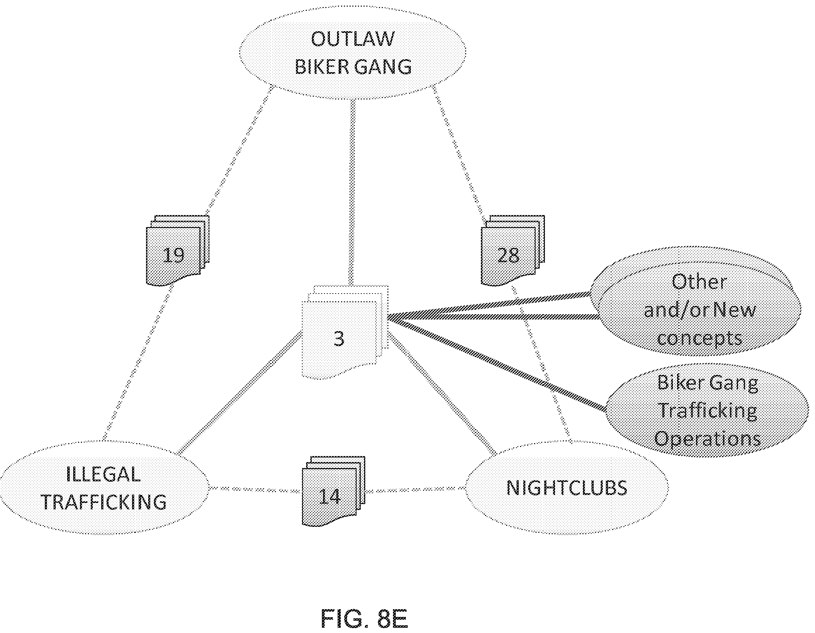

While FIGS. 8C and 8D depict new concepts and other concepts from a single link between two concepts, new concepts and other concepts can also be discovered based on a multilink. As shown in FIG. 8E, in such embodiments, the output from the concept and link discovery system can include a new concept. A concept and link discovery system can be configured such that when more than one concept have a strength of a relationship above a predetermined threshold, by way of example, two or more common documents, the user is prompted to create a new concept and/or the system automatically defines and stores the new concept. By way of example, and with reference to FIG. 8E, because three documents link outlaw biker gangs, with nightclubs, and with illegal trafficking, the system can prompt the user to define a new concept including those three concepts. In this example, the new concept can be called "Biker Gang Trafficking Operations" and can be defined by the regular expression "Outlaw Biker Gang and Nightclubs and Illegal trafficking." In this manner, a user may later select a single concept, such as "Biker Gang Trafficking Operations," and would discover three documents.

Some embodiments described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals per se (e.g., a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to: magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices.

Examples of computer code include, but are not limited to, micro-code or micro-instructions, machine instructions, such as produced by a compiler, code used to produce a web service, and files containing higher-level instructions that are executed by a computer using an interpreter. For example, embodiments may be implemented using Java, C++, or other programming languages (e.g., object-oriented programming languages) and development tools. Additional examples of computer code include, but are not limited to, control signals, encrypted code, and compressed code.

While various embodiments have been described above, it should be understood that they have been presented by way of example only, not limitation, and various changes in form and details may be made. Any portion of the apparatus and/or methods described herein may be combined in any combination, except mutually exclusive combinations. The embodiments described herein can include various combinations and/or sub-combinations of the functions, components and/or features of the different embodiments described. For example, in some embodiments a non-transitory processor-readable medium can store code configured to discover concepts and/or concept links present in multiple relational databases residing at multiple compute devices. In some embodiments, a dataset can be stored locally at a compute device, and the processor, modules, and or methods associated with the host device can be included and/or performed locally at the compute device. In some embodiment, a concept and link discovery system can include multiple compute devices accessing a common dataset. In some embodiments a user may select each concept individually and/or substantially simultaneously.

## Claims

1. A method for performing a concept-based search via a processor on digital data, the method, comprising:
receiving from a user a first selection indicative of a first concept;
providing a plurality of search results responsive to the first selection, each search result within the plurality of search results comprising at least one content item;
extracting, from the at least one content item for each search result, a meaning, resulting in a plurality of meanings;
generating, for each meaning within the plurality of meanings, a concept hierarchy, the concept hierarchy comprising at least one of:
structured data;
unstructured data;
a relationship between two or more instances of the structured data or the unstructured data;
storing the concept hierarchy as part of a dataset, the dataset comprising multiple concept hierarchies;
receiving instructions to perform at least one of adding to, removing from, and revising of the dataset, resulting in a modified dataset;
receiving from the user a selection of a second concept from within the multiple concept hierarchies;
performing concept-based link analysis between the concept hierarchy of the modified dataset and the second concept; and
graphically displaying results of the concept-based link analysis.

2. The method of claim 1, further comprising:
extracting from each content item the multiple concept hierarchies a portion associated with at least one instance of a third concept, resulting in a plurality of portions; and
creating a text file including the plurality of portions and a listing of a content item corresponding to each portion within the plurality of portions.

3. The method of claim 1, wherein the generating of the concept hierarchy further comprises:
identifying one or more concepts within the first search query;
identifying one or more content items from the plurality of content items in which a concept from the one or more concepts is present; and
forming the concept hierarchy based at least in part on the one or more concepts.

4. The method of claim 1, wherein the concept hierarchy includes one or more levels of concepts and sub-concepts, and
wherein the graphically displaying the results of the concept-based link analysis further comprises displaying a visual representation of the one or more levels of concepts and sub-concepts.

5. The method of claim 1, further comprising:
providing at least a portion of the concept-based link analysis in a database accessible over a network.

6. The method of claim 1, further comprising:
providing at least a portion of the concept-based link analysis in a downloadable file.

7. The method of claim 1, further comprising:
receiving user authentication information from the user; and
verifying the user authentication information prior to performing the concept-based link analysis.

8. The method of claim 1, further comprising:
sending the concept-based link analysis via electronic mail.

9. A host device for performing a concept-based search via a processor on digital data, the host device comprising:
a user input module configured to receive from a user a first selection indicative of a first concept;
a concept and link discovery module configured to:
analyze one or more datasets, or portions of datasets, to determine how many, if any, documents include the first concept;
generate, for each meaning within the plurality of meanings, a concept hierarchy, the concept hierarchy comprising at least one of:
structured data;
unstructured data;
a relationship between two or more instances of the structured data or the unstructured data;
store the concept hierarchy as part of a dataset, the dataset comprising multiple concept hierarchies; and
receive instructions to perform at least one of adding to, removing from, and revising of the dataset, resulting in a modified dataset;
wherein the user input module is further configured to receive from the user a selection of a second concept from within the multiple concept hierarchies;
wherein the concept and link discovery module is configured to perform concept-based link analysis between the concept hierarchy of the modified dataset and the second concept; and
the host device comprises a display module configured to graphically display results of the concept-based link analysis.

10. The host device of claim 9, wherein the concept and link discovery module is further configured to:
extract from each content item the multiple concept hierarchies a portion associated with at least one instance of a third concept, resulting in a plurality of portions; and
create a text file including the plurality of portions and a listing of a content item corresponding to each portion within the plurality of portions.

11. The host device of claim 9, wherein the generating of the concept hierarchy further comprises:
identifying one or more concepts within the first search query;
identifying one or more content items from the plurality of content items in which a concept from the one or more concepts is present; and
forming the concept hierarchy based at least in part on the one or more concepts.

12. The host device of claim 9, wherein the concept hierarchy includes one or more levels of concepts and sub-concepts, and
wherein the graphically displaying the results of the concept-based link analysis further comprises displaying a visual representation of the one or more levels of concepts and sub-concepts.

13. The host device of claim 9, further configured to:
provide at least a portion of the concept-based link analysis in a database accessible over a network.

14. The host device of claim 9, further configured to:
provide at least a portion of the concept-based link analysis in a downloadable file.

15. The host device of claim 9, further configured to:
send the concept-based link analysis via electronic mail.
